# FASCICULE DE BREVET EUROPEEN

(11) **EP 0 645 863 B1**
(45) Date de publication et mention de la délivrance du brevet: **06.08.1997**
(21) Numéro de dépôt: 94402119.5
(22) Date de dépôt: 23.09.1994
(51) Int. Cl.: H02G 5/06

(54) **ligne de transport électrique**
Versorgungsleitung
Electric power transmission line

(30) Priorité: 27.09.1993 FR 9311454
(43) Date de publication de la demande: 29.03.1995
(73) Titulaire: GEC ALSTHOM T ET D SA, 75016 Paris (FR)
(72) Inventeur: Thuries, Edmond, Pusignan, F-69330 Meyzieu (FR); Voisin, Gilles, F-69670 Vaugneray (FR); Tixier, René, F-69008 Lyon (FR)
(74) Mandataire: Fournier, Michel

(56) Documents cités:
- EP-A- 0 423 665
- DE-A- 2 211 987
- DE-A- 2 316 100
- FR-A- 2 502 410
- FR-A- 2 642 578
- US-A- 4 335 267

## Description

La présente invention est relative à une ligne de transport électrique.

Le Demandeur a décrit, dans les demandes de brevet français n° 2653263 du 16 octobre 1989 et n° 2692084 du 3 juin 1992 (publiée le 10 décembre 1993), une ligne de transport électrique triphasée, avec isolement à l'azote comprimé et destinée à être posée sur ou enfouie dans le sol. Cette ligne électrique comprend une enveloppe extérieure en acier à l'intérieur de laquelle sont disposés les trois conducteurs correspondant à chacune des phases, entourés chacun d'une enveloppe unique les protégeant des poussières. La résultante du champ magnétique dû au passage d'un courant équilibré dans les trois conducteurs est quasi nulle à une certaine distance (plusieurs mètres) de sorte qu'une telle ligne est sans danger pour les personnes vivant à proximité. Mais, à la faible distance à laquelle les conducteurs se trouvent du tube en acier, le champ magnétique reste important, et entraîne l'apparition dans la tube en acier de courants de Foucault qui engendrent des pertes Joules génératrices d'échauffements.

Il est connu, en particulier par le document WO-A-79 00607, de diminuer les pertes précitées en disposant, entre les conducteurs et l'enveloppe en acier, un écran en métal non magnétique, par exemple l'aluminium.

Un but de la présente invention est de définir des moyens simples, solides et peu onéreux pour maintenir, à l'intérieur de l'enveloppe en acier d'une ligne à isolation gazeuse, à la fois les conducteurs de courant et l'écran d'aluminium.

Un autre but de l'invention est de réaliser une ligne dans laquelle les conducteurs sont à l'abri des poussières.

L'invention a pour objet une ligne électrique triphasée comprenant une enveloppe tubulaire étanche en acier remplie de gaz isolant sous pression, tel que l'azote ou le gaz carbonique CO2, à l'intérieur de laquelle sont placés trois barres conductrices, une enveloppe tubulaire en aluminium de faible épaisseur étant disposée entre l'enveloppe en acier et les barres, caractérisée en ce que les barres conductrices sont maintenues par des colliers en matériau amagnétique, de diamètre extérieur égal au diamètre intérieur de l'enveloppe tubulaire en aluminium, et possédant trois bras radiaux sur lesquel sont vissés les pattes de supports isolants enserrant les barres conductrices.

L'invention est expliquée en détail en référence au dessin annexé dans laquel:

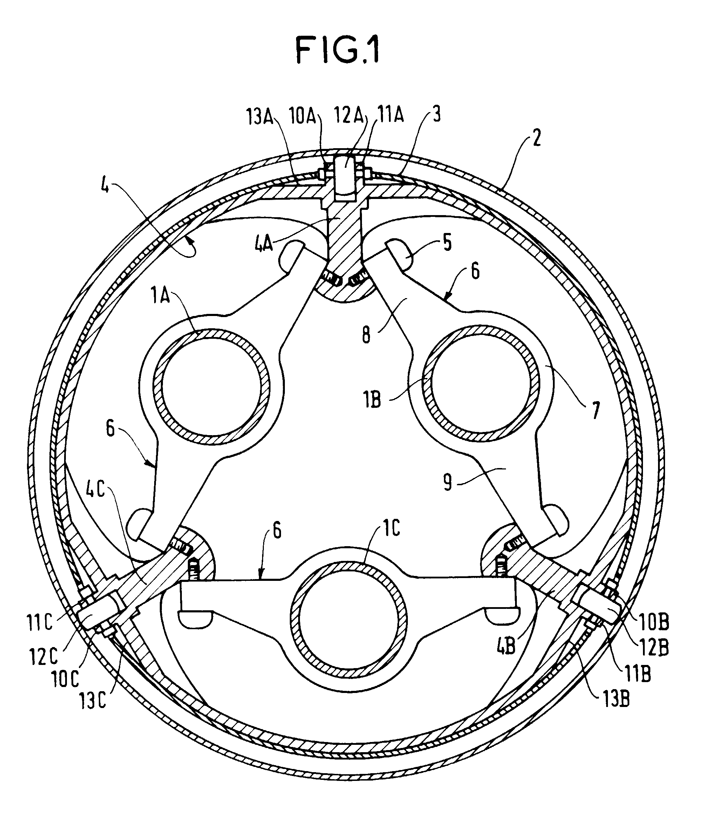

- la figure 1 est une vue en coupe transversale d'une ligne selon l'invention,

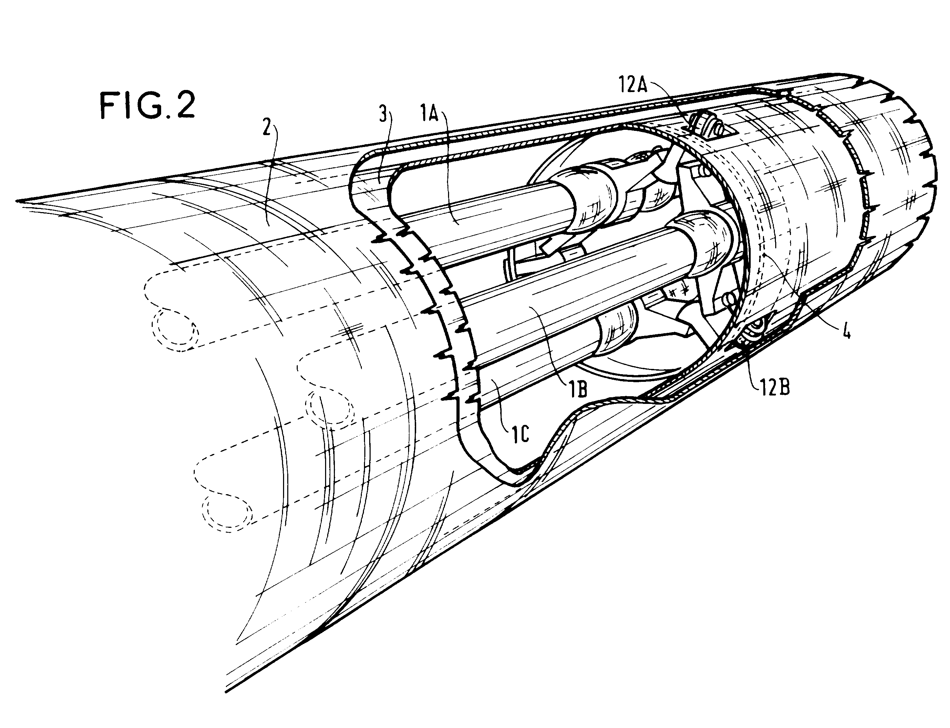

- la figure 2 est une vue en perspective partiellement arrachée de la même ligne.

Dans la figue 1, les références 1A, 1B et 1C désignent trois barres conductrices, par exemple en cuivre, tubulaires, et de section adaptée à l'intensité du courant transité.

Les barres sont disposées à l'intérieur d'une enveloppe tubulaire en acier 2, rempli d'azote sous une pression de 8 à 15 hectopascals. En variante, le gaz d'isolement est du gaz carbonique CO2. Le tube en acier est étanche vis-à-vis du milieu extérieur.

La résultante du champ magnétique dû au passage dans les conducteurs d'un courant triphasé équilibré est quasi nulle à une distance de plusieurs mètres, de sorte que la ligne électrique ne présente aucun danger pour les personnes habitant à proximité, même si la ligne est simplement placée dans un caniveau.

Mais, à la faible distance à laquelle se trouvent les conducteurs du tube en acier, le champ magnétique reste important et pour éviter les pertes par courant de Foucault dans le tube en acier, une enveloppe tubulaire en aluminium 3, de faible épaisseur, est disposée coaxialement au tube en acier, autour des barres conductrices.

De place en place le long du tube en aluminium, sont placés des colliers 4, de préférence en métal amagnétique, de diamètre extérieur égal au diamètre intérieur du tube en aluminium, et possédant trois bras 4A, 4B et 4C, à 120 degrés les uns des autres, et dirigés radialement vers l'axe de la ligne.

Ces bras portent chacun des trous taraudés permettant la fixation au moyen de vis 5 de supports isolants tel que 6, comprenant une partie centrale 7 enserrant une barre conductrice et deux pattes 8 et 9. Les supports 6 sont de préférence en résine époxy. Ils permettent un maintien rigide des barres, particulièrement lorsque se développent des efforts électrodynamiques importants produits par les courants de court-circuit.

Le collier 4 présente, de préférence au droit des bras, des paires de joues 10A-11A, 10B-11B, 10C-11C, venues de moulage, permettant de loger des roulettes 12A, 12B, 12C permettant le roulement du tube 3 sur la paroi interne du tube en acier. Le tube en aluminium présente des échancrures pour le passage des roulettes, mais l'étanchéité aux poussières est conservée grâce à la présence du collier isolant.

Au droit des bras et des joues de roulettes, le collier présente des méplats 13A, 13B, 13C, ce qui permet de disposer le tube en aluminium 3 au plus près du tube en acier 1.

La construction de l'invention est simple, peu onéreuse, solide, et permet un montage aisé en laissant les conducteurs à l'abri des poussières.

## Revendications

1. Ligne électrique triphasée comprenant une enveloppe tubulaire étanche (2) en acier remplie de gaz isolant sous pression, tel que l'azote ou le gaz carbonique CO2, à l'intérieur de laquelle sont placés trois barres conductrices (1A, 1B, 1C), caractérisée en ce qu'une enveloppe tubulaire (3) en aluminium de faible épaisseur est disposée entre l'enveloppe en acier (2) et les barres (1A,1B, 1C), et que les barres conductrices (1A, 1B, 1C) sont maintenues par des colliers (4) en matériau amagnétique, de diamètre extérieur égal au diamètre intérieur de l'enveloppe tubulaire (3) en aluminium, et possédant trois bras radiaux (4A, 4B,4C) sur lesquel sont vissés les pattes (7, 8) de supports isolants (6) enserrant les barres conductrices.

2. Ligne électrique selon la revendication 1, caractérisée en ce qu'au droit des bras (4A, 4B, 4C), les colliers (4) possèdent des paires de joues (10A-11A, 10B-11B, 10C-11C) pour loger des roulettes (12A, 12B, 12C) roulant sur la surface interne de l'enveloppe en acier (2), l'enveloppe en aluminium présentant des échancrures pour le passage des roulettes.

3. Ligne électrique selon la revendication 2, caractérisée en ce que les bras (4A, 4B, 4C) des colliers (4) sont placés sur des méplats(13A, 13B, 13C) des colliers.

## Patentansprüche

1. Elektrische Dreiphasenleitung mit einer dichten rohrförmigen Hülle (2) aus Stahl, die mit einem unter Druck stehenden Isoliergas gefüllt ist, wie z.B. Stickstoff oder Kohlendioxid CO₂, und in der drei Leiterstäbe (1A, 1B, 1C) angeordnet sind, dadurch gekennzeichnet, daß eine rohrförmige Hülle (3) aus Aluminium mit geringer Dicke zwischen der Hülle (2) aus Stahl und den leitenden Stäben (1A, 1B, 1C) liegt, daß die Leiterstäbe (1A, 1B, 1C) durch Krägen (4) aus unmagnetischem Material mit einem Außendurchmesser gleich dem Innendurchmesser der rohrförmigen Hülle (3) aus Aluminium gehalten werden und daß diese Krägen drei radiale Arme (4A, 4B, 4C) besitzen, auf denen die isolierenden Haltelaschen (7, 8) festgeschraubt sind, die die Leiterstäbe umgreifen.

2. Elektrische Leitung nach Anspruch 1, dadurch gekennzeichnet, daß in Höhe der Arme (4A, 4B, 4C) die Krägen (4) je zwei Wangen (10A-11A, 10B-11B, 10C-11C) besitzen, die Rollen (12A, 12B, 12C) aufnehmen, welche auf der inneren Oberfläche der Stahlhülle (2) rollen, wobei die Aluminiumhülle Ausschnitte für den Durchgriff der Rollen aufweist.

3. Elektrische Leitung nach Anspruch 2, dadurch gekennzeichnet, daß die Arme (4A, 4B, 4C) der Krägen (4) auf Abflachungen (13A, 13B, 13C) der Krägen angeordnet sind.

## Claims

1. A three-phase electrical power line comprising a sealed tubular envelope (2) of steel filled with insulating gas under pressure, e.g. nitrogen or carbon dioxide CO₂, and having three conductive bars (1A, 1B, 1C) placed therein, the line being characterized in that a thin tubular envelope (3) of aluminum is located between the steel envelope (2) and the bars (1A, 1B, 1C), and in that the conductive bars (1A, 1B, 1C) are held by collars (4) made of non-magnetic material, having an outside diameter equal to the inside diameter of the aluminum tubular envelope (3), and possessing three radial arms (4A, 4B, 4C) which are screwed to tabs (7, 8) of insulating supports (6) that enclose the conductive bars.

2. An electricity line according to claim 1, characterized in that in register with the arms (4A, 4B, 4C), the collars (4) possess pairs of lugs (10A-11A, 10B-11B, 10C-11C) for receiving wheels (12A, 12B, 12C) that run on the inside surface of the steel envelope (2), the aluminum envelope having slots for receiving the wheels.

3. An electricity line according to claim 2, characterized in that the arms (4A, 4B, 4C) of the collars (4) are placed on flats (13A, 13B, 13C) of the collars.
